# EUROPEAN PATENT APPLICATION

(11) **EP 3 834 966 A1**
(43) Date of publication of application: **16.06.2021**
(21) Application number: 20212939.1
(22) Date of filing: 10.12.2020
(51) Int. Cl.: B22F 10/25, B22F 10/28, B22F 10/30, B22F 12/90, B23K 15/00, B23K 26/03, B23K 26/342, B29C 64/153, B29C 64/393, B33Y 10/00, B33Y 30/00, B33Y 50/02, G01K 11/12, G01K 11/20, G01K 11/32, G01N 21/17, G01N 21/63

(54) **DETERMINING A PARAMETER OF A MELT POOL DURING ADDITIVE MANUFACTURING**

(30) Priority: 10.12.2019 US 201916709167
(71) Applicant: Rohr, Inc., Chula Vista, CA 91910-2098 (US)
(72) Inventor: GULER, Urcan, Avon, CT Connecticut 06001 (US); SHARON, John A., West Hartford, CT Connecticut 06119 (US); SHEEDY, Paul, Bolton, CT Connecticut 06043 (US)
(74) Representative: Dehns

(57) **Abstract**

A method is provided for additively manufacturing an object (30). This method includes: depositing a layer of material on a build surface (26); consolidating at least a portion of the layer of material together to form a portion of the object (28), the consolidating comprising directing an energy beam (40) onto the material to form a melt pool (44); directing a beam of light (50) onto the melt pool (44); detecting a response from the beam of light (50) interacting with the melt pool (44); and determining a parameter of the melt pool (44) based on the detected response.

## Description

### BACKGROUND

### 1. Technical Field

This disclosure relates generally to additive manufacturing and, more particularly, to monitoring additive manufacturing processes.

### 2. Background Information

During a typical additive manufacturing process, powdered material is solidified layer-by-layer to form a body of solidified material. The powdered material may undergo physical, chemical and/or microstructural changes due to intense heating and melting of the material during the consolidation. Some of these changes may be desirable and others of these changes may be undesirable. To observe at least some of these changes, it is known in the art to measure light emitted from a melt pool during additive manufacturing, including during consolidation. While such known measurement processes can provide useful information, background radiation may create signal noise, which can reduce accuracy and/or corrupt certain measurements. There is a need in the art therefore for an improved system and improved methods for observing and measuring material changes occurring during additive manufacturing.

### SUMMARY OF THE DISCLOSURE

According to an aspect of the present invention, a method is provided for additively manufacturing an object. This method includes steps of: depositing a layer of material on a build surface; consolidating at least a portion of the layer of material together to form a portion of the object, the consolidating comprising directing an energy beam onto the material to form a melt pool; directing a beam of light onto the melt pool; detecting a response from the beam of light interacting with the melt pool; and determining a parameter of the melt pool based on the detected response.

According to another aspect of the present invention, a manufacturing method is provided that includes a step of additively manufacturing an object. The additively manufacturing includes steps of: solidifying at least a portion of a layer of powder together to form a portion of the object, the consolidating comprising directing an energy beam onto the layer of powder to form a melt pool within the layer of powder; directing light onto the melt pool; and determining a parameter of the melt pool based on at least one of: (A) a reflection of the light against the melt pool, or (B) scatter produced by an interaction between the light and the melt pool, or (C) luminescence produced by an interaction between the light and the melt pool.

According to still another aspect of the present invention, an additive manufacturing system is provided that includes a material distribution system, a consolidation device, a sensor system and a controller. The material distribution system is configured to deposit a layer of material on a build surface. The consolidation device is configured to consolidate at least a portion of the layer of material together to form a portion of an object, where the consolidating includes directing an energy beam onto the layer of material to form a melt pool within the layer of material. The sensor system is configured to: (A) direct light onto the melt pool; and (B) detect a response from the beam of light interacting with the melt pool. The controller is configured determine a parameter of the melt pool based on the detected response.

The following optional features may be applied to any of the above aspects.

The parameter may be determined based on the reflection of the light against the melt pool. The parameter may be a temperature of the melt pool.

The parameter may be determined based on the scatter produced by the interaction between the light and the melt pool. The parameter may be one of: a microstructure of the melt pool; a phase of the melt pool; a chemical makeup of the melt pool; and a characteristic of a bead on the melt pool.

The response may include a reflection of the beam of light against the melt pool.

The response may include scatter emitted from the melt pool.

The response may include luminescence emitted from the melt pool.

The parameter may be a temperature of the melt pool.

The parameter may be a microstructure of the melt pool.

The parameter may be a phase of the melt pool.

The parameter may be a chemical makeup of the melt pool.

The parameter may be a characteristic of a bead on the melt pool.

The beam of light may be monochromatic light.

The beam of light may be broadband light.

The beam of light may include a continuous wave (CW) of light and/or pulses of light.

The beam of light may track the energy beam.

The energy beam may be an electron beam or a laser beam.

The response may be detected using a spectrometer.

The response may be detected using a scatterometer.

The method may include adjusting a parameter of the consolidating based on the parameter.

The method may include: depositing a second layer of material on a second build surface defined by the layer of material; and solidifying at least a portion of the second layer of material together to form a second portion of the object, where the consolidating includes directing the energy beam onto the second layer of material to form a second melt pool within the second layer of material.

The method may include directing the beam of light onto the second melt pool; detecting a second response from the beam of light interacting with the second melt pool; and determining a second parameter of the second melt pool based on the detected second response.

The foregoing features and the operation of the invention will become more apparent in light of the following description and the accompanying drawings.

### BRIEF DESCRIPTION OF THE DRAWINGS

FIG. 1 is a schematic illustration of an additive manufacturing system.
FIG. 2 is a partial schematic illustration of the additive manufacturing system depicting additional details of a material distribution system.
FIG. 3 is a plan view illustration of a layer of material during a consolidation and sensing step.
FIG. 4 is a partial schematic illustration of the additive manufacturing system depicting additional details of a material consolidation system and a sensor system.
FIG. 5 is a flow diagram of a method for additively manufacturing an object.

### DETAILED DESCRIPTION

The present disclosure includes systems and method for additively manufacturing an object from additive manufacturing material; e.g., additive manufacturing feedstock material such as wire, powder particles, etc. The term "additively manufacturing" may describe a manufacturing technique where an object / article of manufacture is built up in a layer-by-layer fashion.

The additive manufactured object may be configured as a component of an aircraft such as, but not limited to, a component of a propulsion system for the aircraft. The present disclosure, however, is not limited to any particular object configurations. Furthermore, the present disclosure is not limited to manufacturing object(s) for aircraft applications.

The additive manufacturing material may be or include, but is not limited to, metal, ceramic, polymer, a combination of metal and ceramic, a combination of metal and polymer, or a combination of metal, ceramic and polymer. Examples of the metal include, but are not limited to, nickel (Ni), aluminum (Al), titanium (Ti), iron (Fe), cobalt (Co), vanadium (V), chromium (Cr), manganese (Mn), a refractory metal, a rare earth metal, and alloys of one or more of the foregoing metals. Examples of the refractory metal include, but are not limited to, niobium (Nb), molybdenum (Mo), tantalum (Ta), tungsten (W), Zirconium (Zr), hafnium (Hf) and rhenium (Re). Examples of the rare earth metal include, but are not limited to, Ytterbium (Y), cerium (Ce) and lanthanum (La). Examples of the ceramic include, but are not limited to, oxide ceramics such as Al₂O₃ and ZrO₂, nitride ceramics such as aluminum nitride and silicon nitride, carbide ceramics such as silicon carbide and tungsten carbide, and oxide glasses such as borosilicate, alkaline earth silicate, or aluminosilicate glasses. An example of the polymer is thermoplastic material. Various other additive manufacturing materials, of course, are known in the art and the present disclosure is not limited to any particular ones thereof.

The additive manufacturing material may be in the form of powder; e.g., a quantity of discrete powder particles. Each particle of this powder may include all components of the additive manufacturing material. Alternatively, different particles in the powder may include different components of the additive manufacturing material. For example, some of the powder may be formed by first particles with a first material makeup (e.g., first chemical composition) and some of the powder may be formed from second particles with a second material makeup (e.g., second chemical composition) that is different from the first material makeup. The present disclosure, however, is not limited to the foregoing exemplary additive manufacturing material forms and/or combinations of particles.

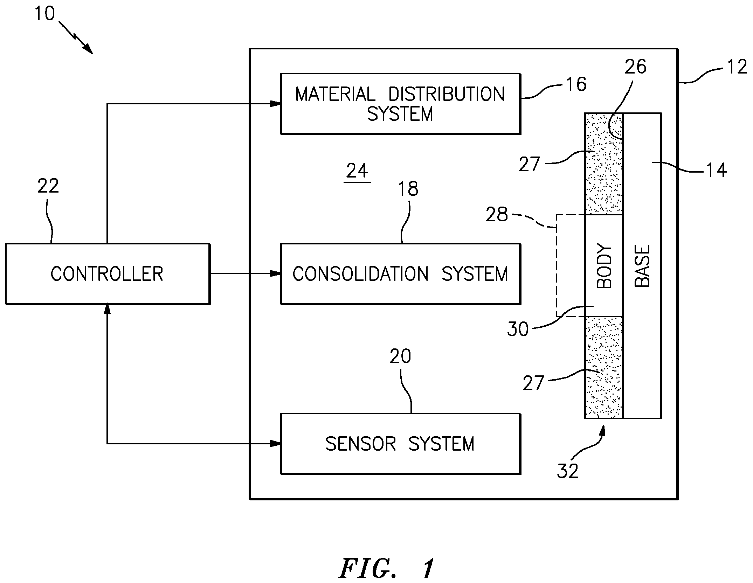

FIG. 1 illustrates an exemplary one of the additive manufacturing systems of the present disclosure, which is identified as 10. For ease of description and illustration, the additive manufacturing system 10 is described below as and shown in the FIG. 1 as a laser powder bed fusion (LPBF) system. The present disclosure, however, is not limited to such an exemplary additive manufacturing system. For example, in other embodiments, the additive manufacturing system 10 may alternatively be configured as a wire arc additive system, an electron beam powder bed system or a direct energy disposition (DED) system; e.g., a laser engineered net shape (LENS) system or a blown powder system. With such a configuration, the additive manufacturing material (e.g., powder) may be fed into an energy beam (e.g., a laser beam) with a carrier gas for deposition.

Referring again to FIG. 1, the additive manufacturing system 10 includes a housing 12, a base 14, a material distribution system 16, a material consolidation system 18 and a sensor system 20. The additive manufacturing system 10 of FIG. 1 also includes a controller 22 in signal communication (e.g., hardwired and/or wirelessly coupled) with one or more of the system components 16, 18 and/or 20.

The housing 12 may be configured as a sealed enclosure or pressure vessel. The housing 12 includes one or more walls that form an internal chamber 24, in which at least a portion (or an entirety) of one or more of the system components 16, 18 and/or 20 may be located. The internal chamber 24 may be a sealed chamber such as, for example, a vacuum chamber.

The base 14 includes a support surface 26. This support surface 26 is adapted to support the additive manufacturing material (e.g., powder 27) during manufacture of at least a portion of the object 28; e.g., a complete additive manufactured object. The support surface 26 is also adapted to support a body 30 that is formed, for example, from a solidified portion of the additive manufacturing material. The support surface 26 of FIG. 1 is substantially horizontal relative to gravity. The support surface 26 may also have a generally planar geometry.

Depending upon the specific step during the additive manufacture, the body 30 supported by the base 14 may be referred to as a semi-finished additively manufactured object or a complete additive manufactured object. The term "semi-finished additively manufactured object" may describe a body which requires additional material buildup before taking on a general geometry of a finished object; e.g., the object 28. By contrast, the term "complete additive manufactured object" may describe a body for which material buildup is substantially complete and/or that has a general geometry of the finished object; e.g., the object 28.

The material distribution system 16 is configured to deposit or otherwise provide a quantity of the additive manufacturing material onto the support surface 26. This quantity of material may be deposited in a substantially uniform layer 32 over at least a portion or all of the support surface 26. As described below, where a layer of material has already been deposited over the support surface 26, the material distribution system 16 is further configured to deposit or otherwise provide an additional quantity of the additive manufacturing material over the support surface 26 and onto the previously deposited layer to provide an additional substantially uniform layer.

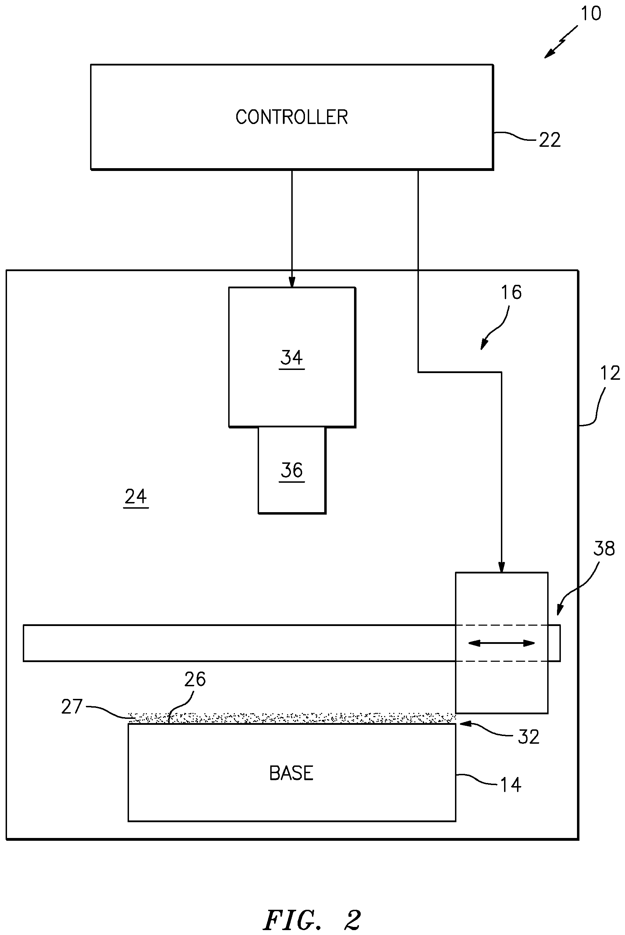

The material distribution system 16 of FIG. 2 includes a material reservoir 34 (e.g., a hopper), a material outlet 36 (e.g., a conduit) and a material coater 38 (e.g., a blade). The reservoir 34 is configured to contain / hold a quantity of the additive manufacturing material; e.g., powder. The outlet 36 is configured to direct the additive manufacturing material from the reservoir 34 onto the support surface 26 into a mound (or mounds). The coater 38 is configured to spread the mound (or mounds) of material across at least a portion of the support surface 26 to provide the layer 32 of additive manufacturing material; e.g., the powder 27. Various other types and configurations of material distribution systems, of course, are known in the art, and the present disclosure is not limited to any particular ones thereof; e.g., a DED system, etc.

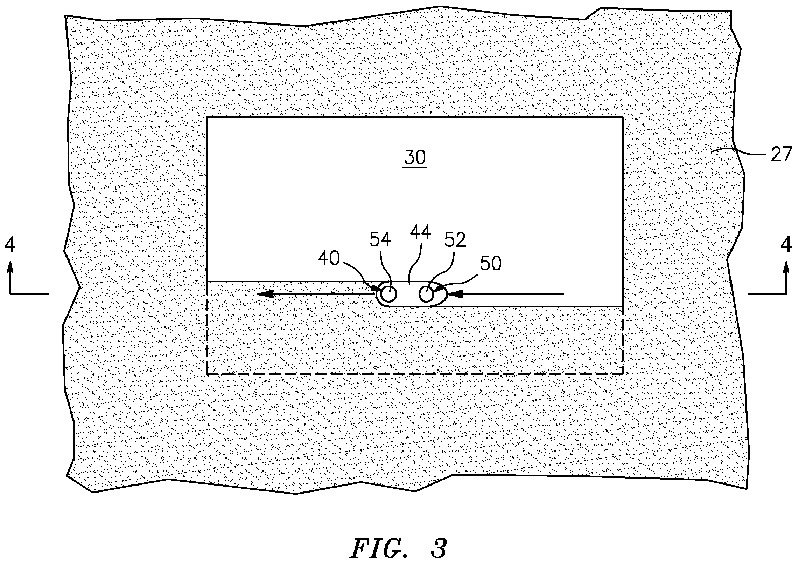

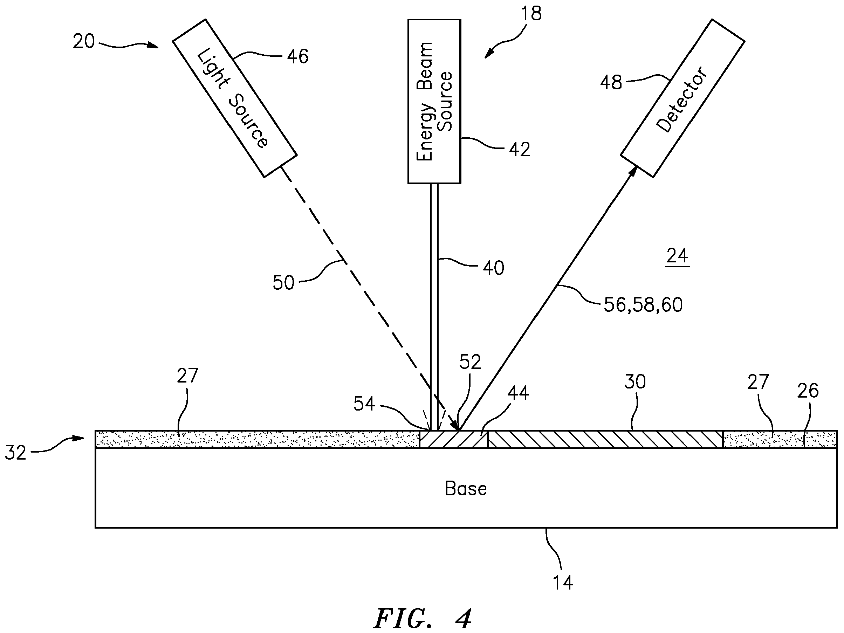

The material consolidation system 18 of FIG. 1 is configured to consolidate at least a portion or all of the additive manufacturing material (e.g., the powder 27) deposited on or otherwise supported by the support surface 26 to form the body 30; see also FIGS. 3 and 4. The material consolidation system 18, for example, may melt at least some of the deposited powder material using at least one energy beam 40 (see FIGS. 3 and 4) such that the melted material fuses together to form the body 30.

The material consolidation system 18 of FIG. 4 includes at least one energy beam source 42 such as, for example, a laser or an electron beam energy source. This energy beam source 42 is configured to generate at least one energy beam 40 (e.g., a laser beam or an electron beam) for melting or otherwise fusing a portion of the deposited material together. The energy beam source 42 is also configured to move (e.g., selectively scan) the energy beam 40 over at least a portion of the deposited material. Various other types and configurations of consolidation devices, of course, are known in the art, and the present disclosure is not limited to including any particular ones thereof.

The sensor system 20 of FIG. 4 is configured to observe characteristics of a melt pool 44 in the layer 32 of additive manufacturing material; see also FIG. 3. The term "melt pool" may describe a region of the additive manufacturing material which is heated by the energy beam 40 into molten form. Generally, the melt pool 44 extends slightly forward of and slightly to the sides of the energy beam 40. The melt pool 44 also typically extends relatively far aft of the energy beam 40 thereby providing the melt pool 44 with an elongated shape. This aft portion of the melt pool 44 is indicative of a recent trail of the energy beam 40 and is formed by molten material which is cooling and thereby forming a portion of the body 30 as well as the object 28.

The sensor system 20 of FIG. 4 includes a light source 46 and a detector 48. The light source 46 is configured to direct light onto the melt pool 44. For example, the light source 46 may direct a beam of light 50 along a trajectory onto the melt pool 44 at a point of incidence 52; e.g., a focal point. This point of incidence 52 of the light with the melt pool 44 may be near a point of incidence 54 between the energy beam 40 and the additive manufacturing material. The point of incidence 52 of the light with the melt pool 44, for example, may be slightly behind the point of incidence 54 between the energy beam 40 and the additive manufacturing material as shown in FIG. 4. Alternatively, the point of incidence 52 of the light with the melt pool 44 may be in front of the point of incidence 54 between the energy beam 40 and the additive manufacturing material, to one of the sides of the point of incidence 54 between the energy beam 40 and the additive manufacturing material, or coincident with the point of incidence 54 between the energy beam 40 and the additive manufacturing material.

The light source 46 may be configured to track the energy beam 40. The light source 46, for example, may adjust the beam of light 50 such that the point of incidence 52 of the light with the melt pool 44 moves with (e.g., follows) the point of incidence 54 between the energy beam 40 and the additive manufacturing material.

The light source 46 may be configured as a broadband light source such as a white light source. Such a light source produces broadband light such as white light. An example of the light source 46 is white light laser diode.

The detector 48 is configured to detect a response from the light (e.g., the beam of light 50) interacting with the melt pool 44 and/or adjacent material. The detector 48 may also be configured to detect a response from the light on a portion of the body 30. The detector 48, for example, may be configured to detect and measure a reflection 56 of the light against the melt pool 44. The detector 48 may also or alternatively be configured to detect and measure scatter 58 in the environment around the melt pool produced by an interaction between the light and the melt pool 44. The detector 48 may also or alternatively be configured to detect and measure luminescence 60 produced by an interaction between the light and the melt pool 44. Luminescence may occur when the material (or beads) absorb the incident beam via electronic or molecular transitions and re-emit light, which light may be characteristic to that material. An example of such a detector 48 is a spectrometer. Another example of the detector 48 is a polarimeter, which may detect scatter.

By using a broadband light source (e.g., a white light source), the detector 48 may be configured to detect reflected light and/or scatter at wavelengths that are not subject to noise by background radiation, etc. The sensor system 20 of the present disclosure therefore may be less susceptible to signal noise and/or measurement error / corruption than a system that relies (e.g., solely) on detecting (e.g., infrared) light emissions generated by the consolidation process.

The controller 22 is configured to process data received from the sensor system 20 (e.g., sensor output data indicative of the detected response) to determine a parameter of the melt pool 44. For example, using known optical spectrometry interpretation techniques, the controller 22 may process data indicative of the reflection 56 of the light off of the melt pool 44 to determine a temperature of the material within the melt pool 44. In another example, using known luminescence spectroscopy interpretation techniques, the controller 22 may process data indicative of the luminescence 60 from the melt pool as a response to incident light 50. In another example, using known scatterometry interpretation techniques, the controller 22 may process data indicative of the scatter 58 produced as a byproduct of the interaction of the light with the material within and/or (e.g., floating, spattering, etc.) above the melt pool 44 to determine one or more melt pool characteristics. Examples of melt pool characteristics include, but are not limited to: temperature of the melt pool material, microstructure of the melt pool material; phase of the melt pool material; chemical makeup of the melt pool material; density of the melt pool material; material lift off rate; melt pool break up; and/or a characteristic of a bead or beads on the melt pool 44. Examples of characteristics of the bead(s) on the melt pool 44 include, but are not limited to, particle makeup, density, velocity, size, shape and/or distribution of the beads. Examples of methodologies for determining some of the foregoing melt pool characteristics are discloses in the following references, each of which is hereby incorporated by reference in its entirety:
▪ *"*Temperature-Dependent Optical Properties of Plasmonic Titanium Nitride Thin Films" by Harsha Reddy et al., ACS Photonics 4, 1413 2017 (https: //pubs. acs. org/doi/abs/10.1021/acsphotonics. 7b00127);
▪ *"*High Temperature Sensing with Refractory Plasmonic Metasurfaces" by U. Guler et al., 2018 12th International Congress on Artificial Materials for Novel Wave Phenomena (Metamaterials), Espoo, 2018, pp. 161-163 (https://ieeexplore.ieee.org/document/8534048);
▪ *"*Spectroscopic ellipsometry characterization of indium tin oxide film microstructure and optical constants" by R.A. Synowicki, Thin Solid Films 313, 394 (1998) (https://www.sciencedirect.com/science/article/pii/S0040609097008535?via% 3Dihub#!);
▪ *"*Surface melting enhanced by curvature effects" by R. Kofman et al., Surface Science 303, 231 (1994) (https://www.researchgate.net/publication/222222995_Surface_melting_enha nced_by_curvature_effects);
▪ *"*Optical study of surface melting on ice" by Michael Elbaum et al., Journal of Crystal Growth 129, 491 (1993) (https://www.sciencedirect.com/science/article/pii/002202489390483D?via% 3Dihub);
▪ *"*Optical analysis of the microstructure of a Mo back contact for Cu(In, Ga)Se2 solar cells and its effects on Mo film properties and Na diffusivity" by Ju-Heon Yoon et al., Solar Energy Materials and Solar Cells 95, 2959 (2011) (https://www.sciencedirect.com/science/article/pii/50927024811001103);
▪ *"*Photoluminescence of noble metals" by Peter Apell et al., Physica Scripta 38, 174 (2006) (https://www.researchgate.net/publication/231078833_Photoluminescence_of _noble_metals);
▪ *"*Measurement of Particle Size, Number Density, and Velocity Using a Laser Interferometer" by W. M. Farmer, Applied Optics 11, 2603 (1972) (https: //www. osapublishing. org/ao/abstract. cfm?uri=ao-11-11 -2603);
▪ *"*Coherent Fourier scatterometry for detection of nanometer-sized particles on a planar substrate surface" by S. Roy et al., Optics Express 22, 13250 (2014) (https: //www. osapublishing. org/oe/fulltext.cfm?uri=oe-22-11-13250&id=286502);
▪ *"*Cross-sectional shape evaluation of a particle by scatterometry" by Tetsuya Hoshino et al., Optics Communications 359, 240 (2016) (https: //www. sciencedirect. com/science/article/abs/pii/S0030401815301425);
▪ *"*Particle size analysis by laser diffraction" by Simon J. Blott et al, Geological Society, London, Special Publications, 232, 63 (2004) (http://mr.crossref.org/iPage?doi=10.1144%2FGSL.SP.2004.232.01.08);
▪ *"*Overview Of Scatterometry Application In High Volume Silicon Manufacturing" by Christopher Raymond, AIP Conference Proceedings 788, 394 (2005) (https://aip.scitation.org/doi/pdf/10.1063/1.2062993); and
▪ *"*Laser Light Scattering" by Benjamin Chu, Annual Review of Physical Chemistry 21, 145 (1970) (https://www.annualreviews.org/doi/10.1146/annurev.pc.21.100170.001045).

Using the foregoing parameter information, the controller 22 may be further configured to send control signals to the material distribution system 16 and/or the material consolidation system 18 to adjust further additive manufacturing. For example, the controller 22 may signal the material distribution system 16 to reduce or increase a thickness of the layer 32 of additive manufacturing material, or increase or decrease the powder feed rate for a DED system. In another example, the controller 22 may signal the material consolidation system 18 to increase or decrease intensity of the energy beam 40, modulate the pulse width or repetition rate of the energy beam 40, change the angle of incidence of the energy beam 40, increase or decrease travel (e.g., scan) speed of the energy beam 40 over the layer 32 of additive manufacturing material, change the chamber vacuum and gas flow conditions, etc. The controller 22 may thereby use feedback from the sensor system 20 to ensure the object 28 being additively manufactured is optimized and/or meets a design specification.

The controller 22 is configured in signal communication (e.g., hardwired and/or wirelessly coupled) with one or more of the other additive manufacturing system components 16, 18 and/or 20. The controller 22 may be implemented with a combination of hardware and software. The hardware may include memory and at least one processing device, which processing device may include one or more single-core and/or multi-core processors. The hardware may also or alternatively include analog and/or digital circuitry other than that described above.

The memory is configured to store software (e.g., program instructions) for execution by the processing device, which software execution may control and/or facilitate performance of one or more operations such as those described in the methods below. The memory may be a non-transitory computer readable medium. For example, the memory may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

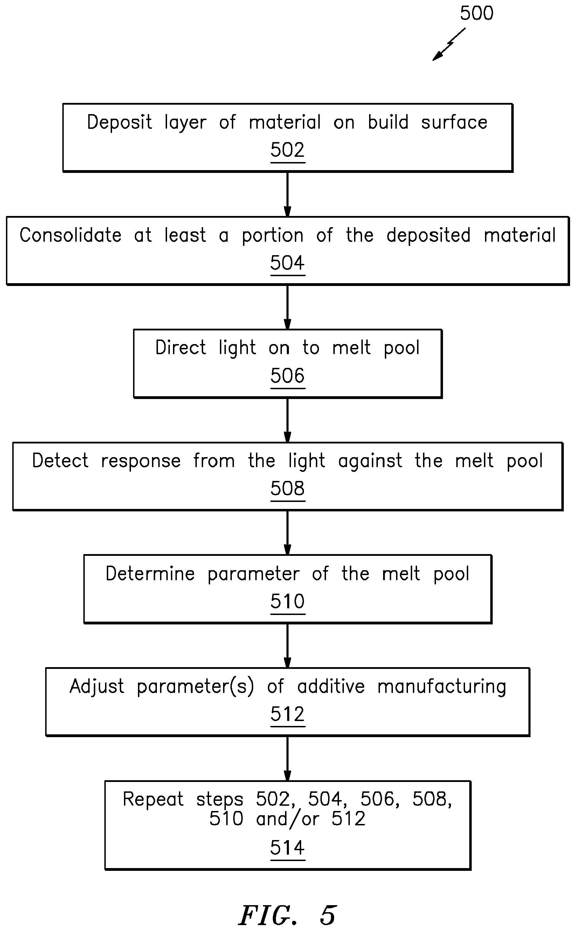

FIG. 5 is a flow diagram of an exemplary one of the additively manufacturing methods, which is identified as 500. This method 500 may be implemented using the additive manufacturing system 10 of FIG. 1, or any other suitable additive manufacturing system.

In step 502, a layer of material is deposited on a build surface. The term "build surface" may describe the support surface 26 where, for example, material has not yet been deposited thereon. The term "build surface" may alternatively describe a surface defined by a layer of material which was previously deposited on or over the support surface 26.

The controller 22 may signal the material distribution system 16 to deposit or otherwise provide a substantially uniform layer 32 of the additive manufacturing material (in its powder 27 form) over at least a portion of the support surface 26. This layer 32 of additive manufacturing material may be deposited directly on the support surface 26. Alternatively, the layer 32 of additive manufacturing material may be deposited on at least one layer of material that was previously deposited and/or solidified on the support surface 26.

In step 504, at least a portion of the deposited material is solidified together. The controller 22, for example, may signal the material consolidation system 18 to selectively scan its energy beam 40 over at least a portion of the layer 32 of additive manufacturing material (in its powder 27 form) to form the body 30; e.g., at least a portion of the object 28. The energy beam 40 may melt the respective additive manufacturing material powder. The melted additive manufacturing material may fuse together and thereafter consolidate providing a solid mass of material that forms the body 30.

In step 506, light is directed onto the melt pool 44. The controller 22, for example, may signal the light source 46 to direct a beam of light 50 onto the melt pool 44.

In step 508, a response from the light interacting with the melt pool 44 is detected. The controller 22, for example, may signal the detector 48 to measure the reflection 56 of the light off of the melt pool 44. The controller 22 may also or alternatively signal the detector 48 to measure the scatter 58 produced by the interaction between the light and the melt pool 44. The sensor system 20 may then output data indicated of one or more of the foregoing measured characteristics to the controller 22 for further processing.

In step 510, a parameter of the melt pool 44 is determined based on the measured characteristic(s). The controller 22, for example, may process the data using known spectrometry techniques as described above to determine one or more parameters of the melt pool 44. These parameters may include, but are not limited to: the temperature of the material within the melt pool 44; the microstructure of the melt pool material; the phase of the melt pool material; the chemical makeup of the melt pool material; the density of the melt pool material; the material lift off rate; the melt pool break up; and/or a characteristic of bead(s) on the melt pool 44.

In step 512, one or more parameters of the method 500 is adjusted based on the parameter. The controller 22, for example, may signal the material distribution system 16 and/or the material consolidation system 18 to adjust the operation thereof, for example, as described above.

In step 514, one or more of the foregoing steps (e.g., the steps 502, 504, 506, 508, 510 and/or 512) may be repeated for one or more iterations in order to additively manufacture the object 28 layer-by-layer. Upon the completion of the one or more iterations, the body 30 may be a complete additive manufactured object; e.g., the object 28.

The method 500 of FIG. 5 may include one or more additional steps other than those described above. For example, the body 30 may undergo additional manufacturing processes during and/or after the material buildup step. Examples of such additional manufacturing processes may include, but are not limited to, machining, surface finishing, coating, etc. One or more of the steps of the method 500 of FIG. 5 may be performed in a different order and/or concurrently. In addition, one or more of the steps of the method 500 of FIG. 5 may be omitted depending upon, for example, the specific layer being built.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method for additively manufacturing an object, comprising:
depositing a layer of material on a build surface (26);
consolidating at least a portion of the layer of material together to form a portion of the object (28), the consolidating comprising directing an energy beam (40) onto the material to form a melt pool (44);
directing a beam of light (50) onto the melt pool (44);
detecting a response from the beam of light (50) interacting with the melt pool (44); and
determining a parameter of the melt pool (44) based on the detected response.

2. The method of claim 1, wherein the response comprises a reflection (56) of the beam of light (50) against the melt pool (44).

3. The method of claim 1 or 2, wherein the response comprises scatter (58) emitted from the melt pool (44).

4. The method of claim 1, 2, or 3, wherein the response comprises luminescence (60) emitted from the melt pool (44).

5. The method of any preceding claim, wherein the parameter comprises:
a temperature of the melt pool (44); and/or
a microstructure of the melt pool (44); and/or
a phase of the melt pool (44); and/or
a chemical makeup of the melt pool (44); and/or
a characteristic of a bead on the melt pool (44).

6. The method of any preceding claim, wherein the beam of light (50) comprises monochromatic light.

7. The method of any preceding claim, wherein the beam of light (50) comprises broadband light.

8. The method of any preceding claim, wherein the beam of light (50) tracks the energy beam (40).

9. The method of any preceding claim, wherein the energy beam (40) comprises an electron beam or a laser beam.

10. The method of any preceding claim, wherein the response is detected using either a spectrometer and/or a scatterometer.

11. The method of any preceding claim, further comprising adjusting a parameter of the consolidating based on the parameter.

12. The method of any preceding claim, further comprising:
depositing a second layer of material on a second build surface (26) defined by the layer of material; and
solidifying at least a portion of the second layer of material together to form a second portion of the object (28), the consolidating comprising directing the energy beam (40) onto the second layer of material to form a second melt pool (44) within the second layer of material.

13. The method of claim 12, further comprising:
directing the beam of light (50) onto the second melt pool (44);
detecting a second response from the beam of light (50) interacting with the second melt pool (44); and
determining a second parameter of the second melt pool (44) based on the detected second response.

14. A manufacturing method, comprising:
additively manufacturing an object (30), the additive manufacturing comprising:
solidifying at least a portion of a layer (32) of powder (27) together to form a portion of the object (28), the consolidating comprising directing an energy beam (40) onto the layer (32) of powder (27) to form a melt pool (44) within the layer (32) of powder (27);
directing light onto the melt pool (44); and
determining a parameter of the melt pool (44) based on at least one of:
a reflection (56) of the light against the melt pool (44); or
scatter (58) produced by an interaction between the light and the melt pool (44); or
luminescence (60) produced by an interaction between the light and the melt pool (44).

15. An additive manufacturing system (10), comprising:
a material distribution system (16) configured to deposit a layer of material on a build surface (26);
a consolidation device (18) configured to consolidate at least a portion of the layer of material together to form a portion of an object (28), wherein the consolidating comprises directing an energy beam (40) onto the layer of material to form a melt pool (44) within the layer of material;
a sensor system (20) configured to
direct light onto the melt pool (44); and
detect a response from the beam of light (50) interacting with the melt pool (44); and
a controller (22) configured determine a parameter of the melt pool (44) based on the detected response.
